# EUROPEAN PATENT APPLICATION

(11) **EP 4 391 202 A1**
(43) Date of publication of application: **26.06.2024**
(21) Application number: 23835894.9
(22) Date of filing: 07.07.2023
(51) Int. Cl.: H01M 50/516, H01M 50/503, H01M 50/533, H01M 50/521, H01M 50/557, H01M 50/249, H01M 50/251, H01M 50/211, H01M 50/584

(54) **BATTERY MODULE**

(30) Priority: 08.07.2022 KR 20220084676; 10.03.2023 KR 20230031777
(71) Applicant: LG Energy Solution, Ltd., Seoul 07335 (KR)
(72) Inventor: LEE, Chang-Je, Daejeon 34122 (KR); CHO, Hee-Won, Daejeon 34122 (KR); LEE, So-Hee, Daejeon 34122 (KR)
(74) Representative: Plasseraud IP
(86) International application number: PCT/KR2023/009709
(87) International publication number: WO 2024/010428

(57) **Abstract**

Disclosed is a battery module. A battery module according to an embodiment of the present disclosure may include a plurality of battery cells each having electrode leads protruding forward and stacked in the left-right direction; and a bus bar including a body portion and a junction portion in which at least a portion of the body portion is configured in a bent form and electrically connected to the electrode lead.

## Description

### TECHNICAL FIELD

The present disclosure relates to a battery module.

The present application claims priority to Korean Patent Application No. 10-2022-0084676 filed on July 8, 2022 and Korean Patent Application No. 10-2023-0031777 filed on March 10, 2023, the disclosures of which are incorporated herein by reference.

### BACKGROUND ART

As the demand for portable electronic products such as laptops, video cameras, and mobile phones has rapidly increased in recent years and the commercialization of robots, electric vehicles, and the like has begun in earnest, research on high-performance secondary batteries capable of repeated charge/discharge has been actively conducted.

Currently commercialized secondary batteries include nickel cadmium batteries, nickel hydride batteries, nickel zinc batteries, lithium secondary batteries, and the like. In particular, lithium secondary batteries are in the spotlight because they have almost no memory effect compared to nickel-based secondary batteries and thus have advantages of free charge/discharge, very low self-discharge rate, and high energy density.

In general, secondary batteries may be classified into can-type batteries in which electrode assemblies are embedded in a metal can and pouch-type batteries in which electrode assemblies are embedded in a pouch of aluminum laminate sheets, depending on the shape of an exterior material.

In such pouch-type secondary batteries, the electrical connection between secondary batteries is made by bringing electrode leads into direct contact with each other in many cases. At this time, to connect the secondary batteries in parallel, electrode leads of the same polarity are connected to each other, and to connect the secondary batteries in series, electrode leads of different polarities are connected to each other.

In addition, for electrical connection and/or voltage sensing of battery cells, a bus bar may be connected to electrode leads, particularly two or more electrode leads. In this case, the joint connection between the electrode lead and the bus bar is often made by welding.

The electrode lead of the battery cell may be welded after being brought into close contact with the bus bar in a bent state. In this case, welding defects may occur depending on the bending quality of the electrode lead. Moreover, when bending the electrode lead, stress may occur on the electrode lead itself or the tab-lead coupling area.

In addition, in order to weld each electrode lead to one bus bar in a state where a plurality of battery cells are stacked, the length of each electrode lead may vary. In this case, deviations may occur in the length of each electrode lead. Also, welding defects may occur due to a gap between the stacked electrode leads according to these length deviations.

In addition, when the battery cell is swelling, the risk of tab disconnection of the battery cell may increase depending on the positions of the bus bar and electrode leads. In particular, in the case of the electrode leads of an inner or outermost battery cell of a battery module, the bending angle of the battery cell tab may become very large depending on the amount of swelling. Also, this increase in bending angle may cause an internal disconnection issue of the battery cell tab.

In addition, according to the conventional welding configuration between the electrode lead of a battery cell and the bus bar, there is a problem that the stacking order of the battery cells is limited to secure weldability depending on the material of the battery cell electrode lead.

### DISCLOSURE

### Technical Problem

The present disclosure is designed to solve the above-described problems and other problems.

Another object of the present disclosure may be to provide a battery module including a structure that improves the weldability of electrode leads and bus bars.

Still another object of the present disclosure may be to provide a battery module including a structure that may reduce scrap costs when manufacturing unit battery cells.

Still another object of the present disclosure may be to provide a battery module including a structure that may effectively prevent disconnection of battery cell tabs or electrode leads.

Still another object of the present disclosure may be to provide a battery module including a structure in which the bending process of electrode leads may be eliminated.

Still another object of the present disclosure may be to provide a battery module including a structure in which the degree of freedom in the welding method may increase according to the joint structure.

Still another object of the present disclosure may be to provide a battery module including a structure that may prevent assembly/welding defects due to deviations in electrode lead cutting length.

Still another object of the present disclosure may be to provide a battery module including a structure that may prevent welding defects due to bending quality.

Still another object of the present disclosure may be to provide a battery module including a structure in which welding quality may be stably secured through welding of homogeneous materials of the bus bar and the electrode lead.

Still another object of the present disclosure may be to provide a battery module including a structure that may prevent disconnection due to swelling and improve assembly by maintaining the level of the battery cell tab and the electrode lead.

### Technical Solution

A battery module according to an embodiment of the present disclosure for achieving the above-described object may include a plurality of battery cells each having electrode leads protruding forward and stacked in the left-right direction; and a bus bar including a body portion and a junction portion in which at least a portion of the body portion is configured in a bent form and electrically connected to the electrode lead.

In addition, the electrode lead and the junction portion may be configured to be coupled by welding.

In addition, the junction portion may be formed in plurality to correspond one-to-one to the electrode lead.

In addition, the electrode lead may be configured to have a flat shape.

In addition, the electrode lead and the junction portion may be configured to be in surface contact.

In addition, the junction portion may be configured to be integrally formed with the body portion.

In addition, the junction portion may extend in the front-rear direction.

In addition, the junction portion may be formed by cutting at least a portion of the body portion and bending the cut portion.

In addition, the bus bar may include a hole adjacent to the junction portion and penetrating the body portion, wherein the diameter of the junction portion may be configured to be smaller than the diameter of the hole.

In addition, the bus bar may include a hole adjacent to the junction portion and penetrating the body portion, wherein the electrode lead may pass through the hole.

In addition, at least a portion of the bus bar may be composed of different metal layers.

In addition, at least a portion of the junction portion may be composed of different metal layers.

A battery pack according to the present disclosure for achieving the above-described object includes a battery module according to the present disclosure.

A vehicle according to the present disclosure for achieving the above-described object includes a battery module according to the present disclosure.

An energy storage system according to the present disclosure for achieving the above-described object includes a battery module according to the present disclosure.

### Advantageous Effects

According to at least one of the embodiments of the present disclosure, weldability may be improved in a configuration where the electrode lead and the bus bar are welded.

According to at least one of the embodiments of the present disclosure, scrap costs may be reduced when manufacturing a unit cell.

According to at least one of the embodiments of the present disclosure, disconnection of a cell tab or lead may be effectively prevented.

According to at least one of the embodiments of the present disclosure, the bending process of the cell lead may be eliminated. Therefore, stress generation and welding defects in cell tabs or cell leads may be effectively prevented. In addition, according to this aspect of the present disclosure, the manufacturing cost of battery modules or packs may be reduced and the manufacturing process may be simplified.

According to at least one of the embodiments of the present disclosure, the degree of freedom of the welding method according to the joint structure may be increased.

According to at least one of the embodiments of the present disclosure, assembly/welding defects due to deviations in lead cutting length may be prevented.

According to at least one of the embodiments of the present disclosure, welding defects due to bending quality may be prevented.

According to at least one of the embodiments of the present disclosure, welding quality may be stably secured through welding of homogeneous materials of the bus bar and the electrode lead.

According to at least one of the embodiments of the present disclosure, disconnection due to swelling may be prevented and assembly may be improved by maintaining the level of the cell tab and the cell lead.

In addition, the present disclosure may have various other effects, which will be described in detail in each embodiment, or descriptions of effects that may be easily understood by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus the present disclosure is not construed as being limited to the drawing.
FIG. 1 is a perspective view showing a battery module according to an embodiment of the present disclosure.
FIG. 2 an exploded view showing some components of a battery module according to an embodiment of the present disclosure.
FIG. 3 is a view showing a partial configuration of a battery module according to an embodiment of the present disclosure.
FIG. 4 is a side view showing a partial configuration of the battery module of FIG. 3.
FIG. 5 is a view showing a partial configuration of a battery module according to another embodiment of the present disclosure.
FIG. 6 is a side view showing a partial configuration of the battery module of FIG. 5.
FIG. 7 is a perspective view showing a bus bar of a battery module according to an embodiment of the present disclosure.
FIG. 8 is a perspective view showing a bus bar of a battery module according to another embodiment of the present disclosure.
FIG. 9 is a perspective view showing a bus bar of a battery module according to still another embodiment of the present disclosure.
FIG. 10 is a side view showing a battery module according to another embodiment of the present disclosure.
FIG. 11 is a side view showing a battery module according to still another embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

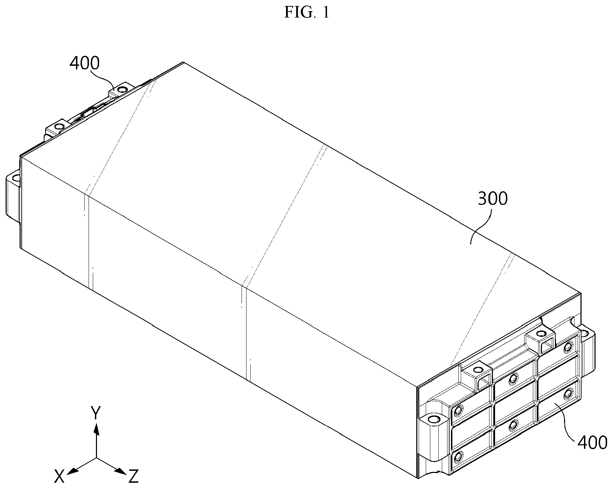

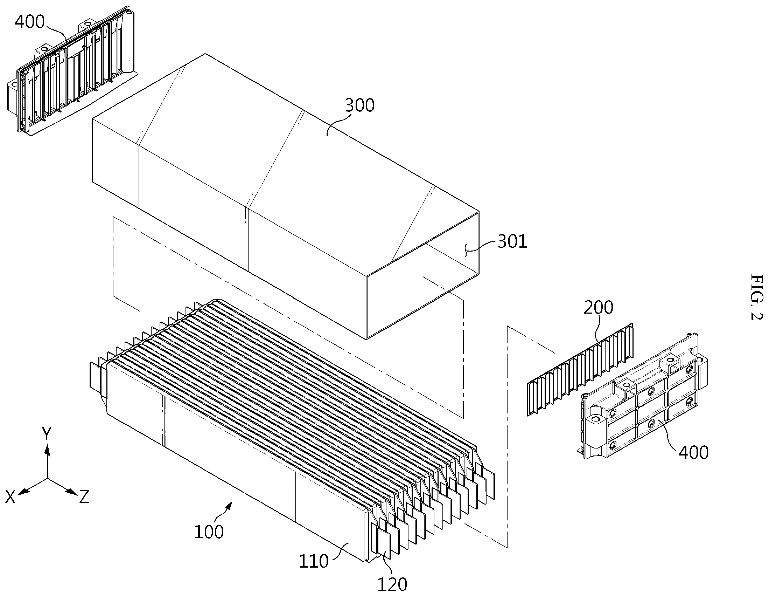

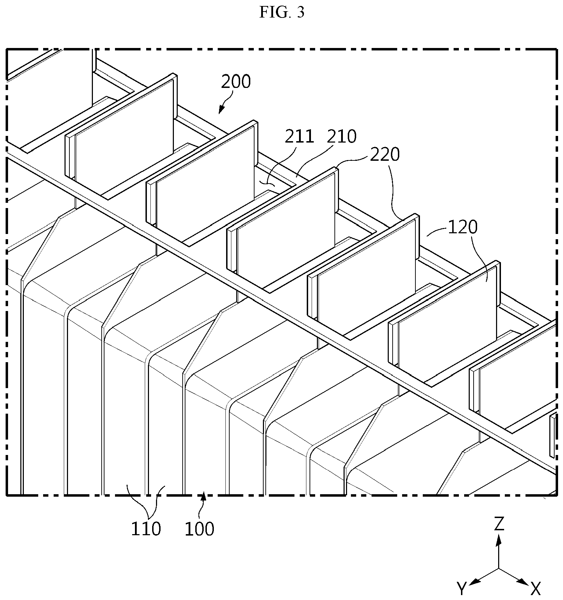

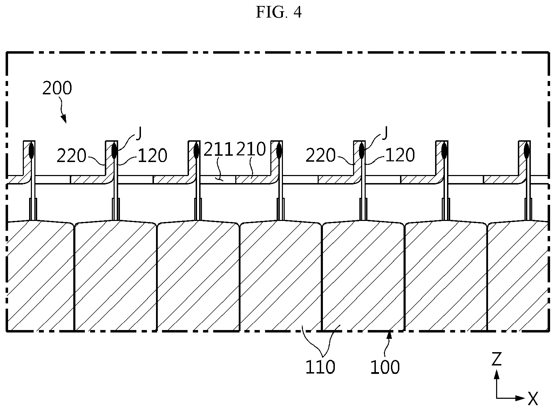

FIG. 1 is a perspective view showing a battery module according to an embodiment of the present disclosure. FIG. 2 an exploded view showing some components of a battery module according to an embodiment of the present disclosure. FIG. 3 is a view showing a partial configuration of a battery module according to an embodiment of the present disclosure. FIG. 4 is a side view showing a partial configuration of the battery module of FIG. 3. For convenience of description, FIG. 4 shows a cross-sectional view of the bus bar 200 only, and schematically illustrates the body 110 of the battery cell 100. Referring to FIGS. 1 to 4, the battery module may be configured to include a plurality of battery cells 100 and a bus bar 200.

Referring to FIGS. 1 and 2, the battery module may include a frame 300 providing an internal space 301. The frame 300 may have a shape with open front and rear sides. The end cover 400 may be provided on the front and rear sides of the frame 300. The end cover 400 may be coupled to the open portion of the frame 300. In this case, the frame 300 and the end cover 400 may be coupled by welding.

The battery module may be referred to as a cell assembly or battery pack. For example, if the battery module according to an embodiment of the present disclosure further includes components such as a BMS, a bus bar assembly, a case, a relay, a current sensor, and the like, it may be referred to as a battery pack.

The battery cell 100 may be provided in plurality. Each battery cell 100 may include a body 110 and an electrode lead 120 extending or protruding from the body 110. Each of the plurality of battery cells 100 may have at least one electrode lead 120 protruding from the body 110 toward the front side or in the +Z-axis direction. In addition, each of the plurality of battery cells 100 may have at least one electrode lead 120 protruding from the body 110 toward the rear side or in the -Z-axis direction. The plurality of battery cells 100 may be stacked in the left-right direction or the X-axis direction. The battery cell 100 may be accommodated inside the frame 300.

The plurality of battery cells 100 may be pouch-type secondary batteries. The pouch-type secondary battery may be configured in a form where an electrode assembly and an electrolyte are accommodated inside a pouch case. The pouch case may be configured to seal the edges of two pouches in a state where the electrode assembly and the electrolyte are accommodated. The pouch-type secondary battery may be configured in a form where a storage portion is located at the center and a sealing portion surrounds the periphery. The pouch-type secondary battery may be configured in a square shape having four edges, and three or four of the four edges may be sealed.

The bus bar 200 may be electrically connected to the electrode lead 120. Each of the electrode leads 120 of the plurality of battery cells 100 may be physically and/or electrically connected to the bus bar 200. According to the connection type of the bus bar 200 and the electrode lead 120, the plurality of battery cells 100 may be electrically connected in series or in parallel.

The bus bar 200 may extend in the left-right direction. In addition, the longitudinal direction of the bus bar 200 may be perpendicular to the direction in which the electrode lead 120 protrudes. Also, the bus bar 200 may be located between the end cover 400 and the plurality of battery cells 100. In addition, the bus bar 200 may be accommodated in the space formed by the frame 300 and the end cover 400.

The bus bar 200 may be configured to include a body portion 210 and a junction portion 220. The body portion 210 may be configured in a bar and/or plate shape. As the number of battery cells 100 connected to the bus bar 200 increases, the body portion 210 may be configured to extend long. The body portion 210 may be made of a metal material.

The junction portion 220 may be configured in a form where at least a portion of the body portion 210 is bent. Alternatively, the junction portion 220 may be configured to extend or protrude from the body portion 210. The junction portion 220 may be physically and/or electrically connected to the electrode lead 120. For example, referring to FIG. 3, the junction portion 220 may be bent toward the front side or in the +Z-axis direction. The junction portion 220 may be positioned to face the electrode lead 120.

According to this configuration of the present disclosure, the junction portion 220 is formed by bending, so that the electrode lead 120 may be physically and/or electrically connected to the junction portion without bending or folding. As a result, pulling or stress applied to the electrode lead 120 may be minimized. Also, damage to or disconnection of the electrode lead 120 may be prevented.

In addition, according to this configuration of the present disclosure, the electrode lead 120 and the tabs of the battery cell 100 may be connected, attached, fixed, or coupled horizontally. That is, the electrode tab and the electrode lead 120 are coupled through surface contact inside the battery cell 100, and this coupling portion may be maintained flat without being bent. Therefore, the possibility of disconnection of or damage to the battery cell 100 may be reduced.

In addition, according to this configuration of the present disclosure, when swelling occurs in the battery cell 100, tab pulling of the electrode lead 120 may be minimized even if the battery cell 100 swells in the left-right direction.

In addition, according to the above configuration of the present disclosure, since the junction portion 220 is formed by bending the body portion 210, manufacturing of the bus bar may be facilitated, and manufacturing time and cost may be reduced. Therefore, the productivity of bus bars and battery modules including the same may be improved.

Referring to FIGS. 3 and 4, the electrode lead 120 and the junction portion 220 of the battery module according to an embodiment of the present disclosure may be configured to be coupled by welding. For example, the electrode lead 120 and the junction portion 220 may be welded and coupled in a lead joint J method.

According to this configuration of the present disclosure, the electrode lead 120 and the junction portion 220 are coupled by welding, and thus components or additional processes for coupling may be omitted. As a result, the process may be simplified compared to other coupling methods.

In addition, according to this configuration of the present disclosure, welding may be performed in a state where the electrode lead 120 faces the junction portion 220 without being bent, thereby improving weldability.

Referring to FIGS. 3 and 4, the junction portion 220 of the battery module according to an embodiment of the present disclosure may be formed in plurality to correspond one-to-one to the electrode lead 120. For example, referring to FIGS. 3 and 4, each electrode lead 120 may be coupled to one junction portion 200. In addition, each electrode lead 120 may be configured to have the same length in the front-rear direction or the same length in the Z-axis direction. That is, the entire battery cell 100 included in the battery module according to the present disclosure may have the same length of the electrode leads 120 protruding outward from the body 110. In this case, the arrangement spacing of the plurality of battery cells 100 and the arrangement spacing of the plurality of junction portions 200 may be configured to be the same.

Conventionally, a plurality of electrode leads 120 form one welded joint J and are connected to the bus bar 200. In this case, there is an aspect that the degree of freedom in welding is limited depending on the metal material composition of the electrode lead 120. For example, when the electrode lead 120 made of aluminum and the electrode lead 120 made of copper are overlapped and welded together, the arrangement order of the electrode leads 120 may be limited to ensure weldability. As a result, there may be restrictions that the arrangement order of the plurality of battery cells 100 should be limited or the electrode leads 120 should be produced with different lengths.

However, according to the above embodiment of the present disclosure, one junction portion 220 and one electrode lead 120 may be coupled by one joint J, thereby improving weldability.

In addition, according to this configuration of the present disclosure, the electrode leads 120 of each battery cell 100 may be configured to have the same shape or the same length, thereby improving productivity of the battery module.

Referring to FIGS. 3 and 4, the electrode lead 120 of the battery module according to an embodiment of the present disclosure may be configured to have a flat shape.

Moreover, the electrode lead 120 may be configured to have an overall flat shape. That is, the electrode lead 120 may be configured in a planar shape without bending or folding as a whole. In addition, each of the plurality of electrode leads 120 may have a flat shape and/or a planar shape.

As a more specific example, referring to the embodiment of FIG. 4, the electrode lead 120 extends outward from the body 110 of the battery cell 100, but may extend in a straight line in parallel to the Z-axis direction without being bent.

Conventionally, a plurality of electrode leads 120 form one welded joint and are connected to the bus bar 200. In this case, at least a portion of the plurality of electrode leads 120 may be bent, and the electrode leads 120 may be damaged due to bending.

However, according to the above embodiment of the present disclosure, the electrode lead 120 may have an overall flat shape without bending or folding, thereby preventing damage to or disconnection of the electrode lead 120.

In addition, according to this configuration of the present disclosure, the process of bending the electrode lead 120 may be omitted, thereby improving productivity of the battery module.

In addition, the bus bar 200 according to this configuration of the present disclosure may be referred to as a bending-free bus bar 200 in the sense that the electrode lead 120 may be configured not to be bent for welding.

Referring to FIGS. 3 and 4, the electrode lead 120 and the junction portion 220 of the battery module according to an embodiment of the present disclosure may be configured to be in surface contact. The junction portion 220 may be formed in a flat shape by bending at least a portion of the body portion 210 having a bar or plate shape. The junction portion 220 and the electrode lead 120 may be physically and/or electrically connected, and may be in surface contact.

According to this configuration of the present disclosure, the contact area or coupling area between the junction portion 220 and the electrode lead 120 may be increased, thereby preventing assembly defects or welding defects due to deviations in length of the electrode lead 120. In addition, in this case, the contact area between the junction portion 220 and the electrode lead 120 may be stably secured above a certain level, thereby effectively reducing electrical resistance and the resulting power loss and heat generation.

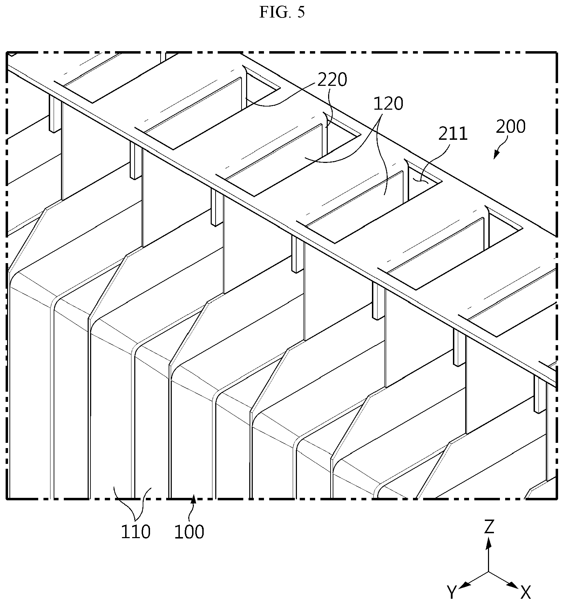

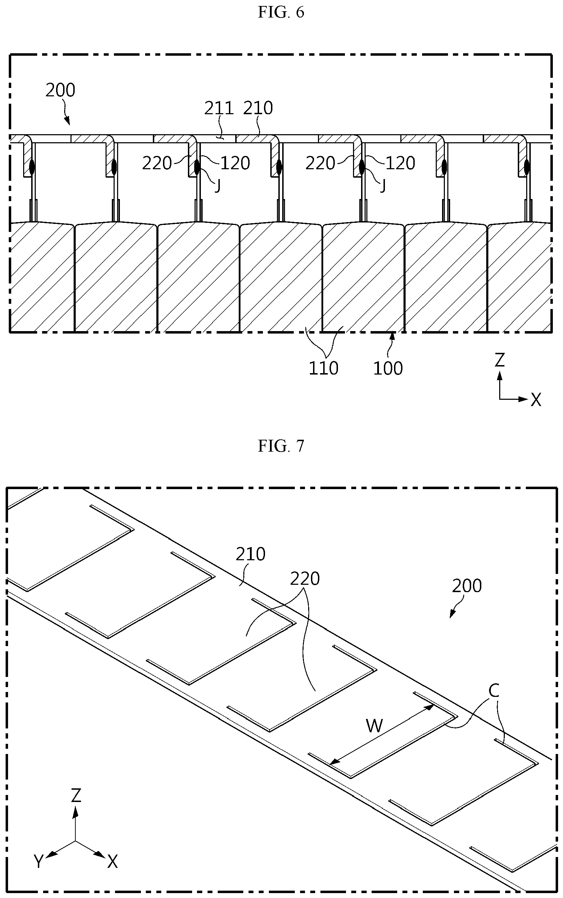

FIG. 5 is a view showing a partial configuration of a battery module according to another embodiment of the present disclosure. FIG. 6 is a side view showing a partial configuration of the battery module of FIG. 5. For convenience of description, FIG. 6 shows a cross-sectional view of the bus bar 200 only, and schematically illustrates the body 110 of the battery cell 100. Referring to FIGS. 3 to 6, the junction portion 220 of the battery module according to an embodiment of the present disclosure may extend in the front-rear direction.

The junction portion 220 may extend toward the front side or in the +Z-axis direction according to the bending direction. Alternatively, the junction portion 220 may extend toward the rear side or in the -Z-axis direction according to the bending direction. Alternatively, at least a portion of the junction portion 220 may extend toward the front side or in the +Z-axis direction, and the remainder may extend toward the rear side or in the -Z-axis direction. When the junction portion 220 extends toward the rear side or in the -Z-axis direction, the length of the electrode lead 120 may be configured to be shorter than when the junction portion 220 extends toward the front side or in the +Z-axis direction.

In particular, the junction portion 220 may be configured to be bent approximately perpendicular to the body portion 210. For example, referring to the embodiment of FIGS. 3 to 6, when the body portion 210 is configured parallel to the X-Y plane, the junction portion 220 may be configured parallel to the X-Z plane so as to be perpendicular to the body portion 210.

In addition, in this embodiment, the junction portion 220 may be configured to be parallel to the longitudinal direction of the battery cell 100. For example, in the embodiment of FIG. 6, the battery cell 100 can be said to be formed long in the Z-axis direction, and the junction portion 220 of the bus bar 200 can also be said to be formed to extend long in the Z-axis direction.

According to this configuration of the present disclosure, the electrode lead 120 may selectively extend to the front side or the rear side, thereby increasing the degree of freedom in designing the battery module.

In particular, in the above embodiment, the electrode lead 120 may continue to maintain a straight shape not only in the portion protruding outward from the sealing portion of the body 110, but also in the portion welded to the junction portion 220 of the bus bar 200.

Therefore, in this case, welding between the electrode lead 120 and the junction portion 220 may be facilitated, while damage to the electrode lead 120 may be more effectively prevented.

According to this configuration of the present disclosure, the configuration in which the electrode lead 120 protrudes toward the front of the bus bar 200 may be omitted by bending the electrode lead 120 backward. As a result, the electrode lead 120 and the junction portion 220 may be located inside the bus bar 200 and may be more stably protected from the outside. Also, the degree of freedom in designing space in front of the bus bar 200 may be increased. In addition, the electrode lead 120 may be selectively welded to any one of both surfaces of the rearwardly bent junction portion 220. In this case, the electrode lead 120 may be welded to any one of both surfaces of the junction portion 220 so that bending may be minimized.

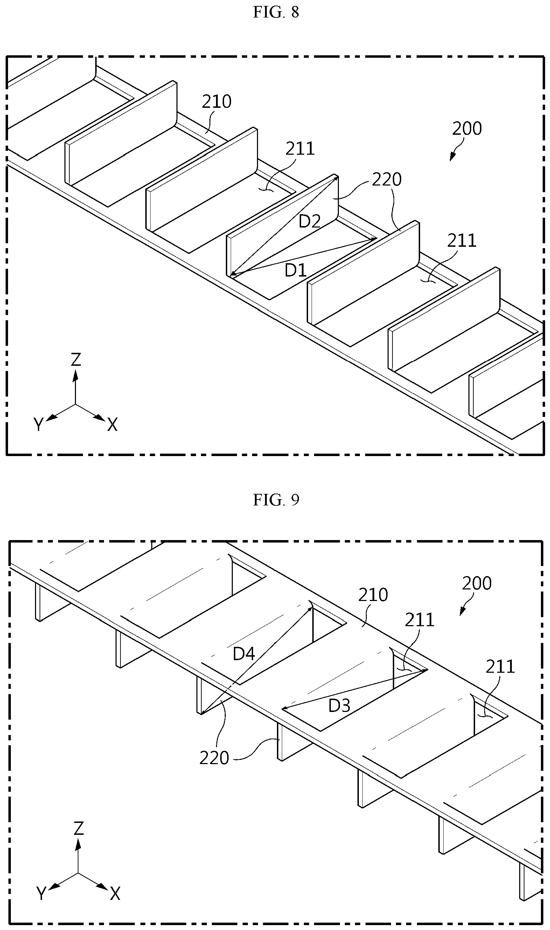

FIG. 7 is a perspective view showing a bus bar 200 of a battery module according to an embodiment of the present disclosure. FIG. 8 is a perspective view showing a bus bar 200 of a battery module according to another embodiment of the present disclosure. FIG. 9 is a perspective view showing a bus bar 200 of a battery module according to still another embodiment of the present disclosure. Referring to FIGS. 7 to 9, the junction portion 220 according to an embodiment of the present disclosure may be configured to be integrally formed with the body portion 210.

According to this configuration of the present disclosure, since the junction portion 220 does not require separate component processing, the productivity of the battery module may be improved. Also, in this case, there is no need for a structure or a fastening member for coupling the junction portion 220 to the body portion 210, so that the coupling force between the junction portion 220 and the body portion 210 may be stably secured. In addition, contact resistance between the junction portion 220 and the body portion 210 may be eliminated or reduced.

Referring to FIGS. 7 to 9, the junction portion 220 of the bus bar 200 of the battery module according to an embodiment of the present disclosure may be configured such that at least a portion of the body portion 210 is cut and the cut portion is formed by bending.

Referring to FIG. 7, at least a portion of the body portion 210 may be cut. The cut line C may penetrate the body portion 210. The cut line C may form three of the four sides of a rectangle. In this case, the width W of the cut portion may be formed to be equal to or greater than the width of the electrode lead 120.

Referring to FIG. 8, the cut portion of the body portion 210 may be bent toward the front side or in the +Z-axis direction. Referring to FIG. 9, the cut portion of the body portion 210 may be bent toward the rear side or in the -Z-axis direction. The cut portion of the body portion 210 may be bent to form the junction portion 220. The junction portion 220 may be bent or extended in a direction orthogonal to the body portion 210.

According to this configuration of the present disclosure, the junction portion 220 does not require separate component processing and may be formed in a relatively simple process. As a result, the productivity of the battery module may be improved.

Referring to FIGS. 7 to 9, the bus bar 200 of the battery module according to an embodiment of the present disclosure may include a hole 211 adjacent to the junction portion 220 and penetrating the body portion 210, and the diameters D2, D4 of the junction portion 220 may be configured to be smaller than the diameters D1, D3 of the hole 211.

The hole 211 may be formed by bending the junction portion 220. The hole 211 may be formed in a rectangular shape. The diameters D 1, D3 of the hole 211 may mean the maximum diameters D1, D3 of the hole 211. The diameters D2, D4 of the junction portion 220 may mean the maximum diameters D2, D4 of the junction portion. In this case, the junction portion 220 may mean a flat plate portion. The diameters D2, D4 of the junction portion 220 may be configured to be smaller than the diameters D1, D3 of the hole 211. The diameters D2, D4 of the junction portion 220 may be formed as small as the width of the cut line C in the diameters D1, D3 of the hole 211.

In addition, when the bent junction portion 220 is flattened, the junction portion 220 may be entirely accommodated in the hole 211.

According to this configuration of the present disclosure, when a portion of the body portion 210 is bent, the junction portion 220 and the hole 211 may be formed at the same time. As a result, the manufacturing process of the bus bar 200 may be simplified and the productivity of the battery module may be improved.

Referring to FIGS. 7 and 8, the bus bar 200 of the battery module according to an embodiment of the present disclosure may include a hole 211 adjacent to the junction portion 220 and penetrating the body portion 210, and the electrode lead 120 may be configured to pass through the hole 211.

At least a portion of the electrode lead 120 may pass through the hole 211 and be coupled to the junction portion 220. At this time, the electrode lead 120 and the junction portion 220 may be referred to as a lead insert joint J structure.

According to this configuration of the present disclosure, when a portion of the body portion 210 is bent, the junction portion 220 and the hole 211 may be formed at the same time. As a result, the manufacturing process of the bus bar 200 may be simplified and the productivity of the battery module may be improved.

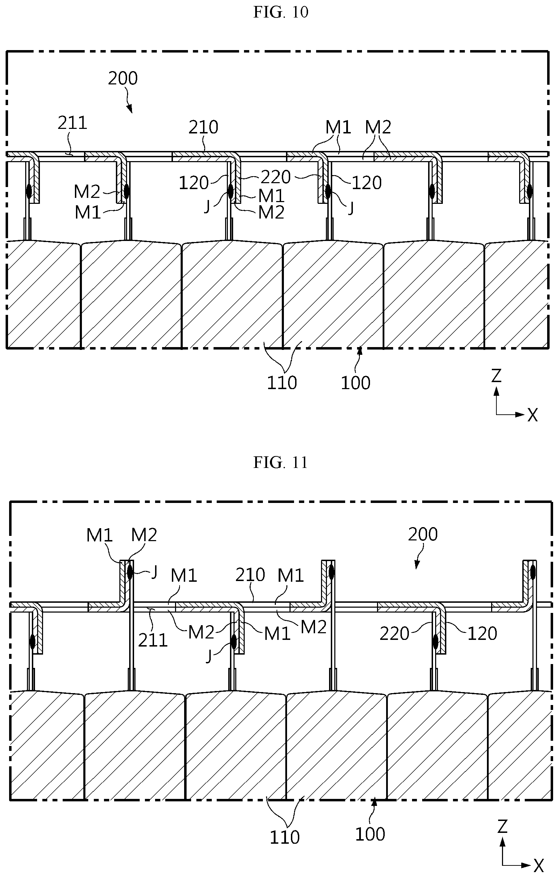

FIG. 10 is a perspective view showing a battery module according to another embodiment of the present disclosure. FIG. 11 is a perspective view showing a battery module according to still another embodiment of the present disclosure. For convenience of description, FIGS. 10 and 11 show a cross-sectional view of the bus bar 200 only, and schematically illustrate the body 110 of the battery cell 100. Referring to FIGS. 10 and 11, at least a portion of the bus bar 200 of the battery module according to an embodiment of the present disclosure may be composed of different metal layers M1, M2.

The bus bar 200 may be made of a clad metal material. For example, the bus bar 200 may be composed of two metal layers M1, M2. The two metal layers M1, M2 may be made of different materials. In particular, the bus bar 200 may be configured to include a metal layer made of the same material as the metal material of the negative electrode lead 120 and a metal layer made of the same material as the metal material of the positive electrode lead 120. For example, one surface of the bus bar 200 may be made of aluminum, and the other surface of the bus bar may be made of copper.

According to this configuration of the present disclosure, the electrode lead 120 may be welded to the metal layers M1, M2 of the bus bar 200 having the same metal material as that of the electrode lead 120. As a result, the weldability of the bus bar 200 and the electrode lead 120 may be improved. In addition, due to this, the degree of freedom in arranging the plurality of battery cells 100 may be increased.

Referring to FIGS. 10 and 11, at least a portion of the junction portion 220 of the battery module according to an embodiment of the present disclosure may be composed of different metal layers M1, M2. The body portion 210 and the junction portion 220 of the bus bar 200 may be integrally formed, and the body portion 210 and the junction portion 220 may be made of the same clad metal material.

Referring to FIG. 10, the junction portion 220 may be bent toward the rear side or in the -Z-axis direction. The right side of the junction portion 220 may be composed of a first metal layer M1, and the left side of the junction portion 220 may be composed of a second metal layer M2. In this case, the electrode lead 120 may be selectively welded to the first metal layer M1 or the second metal layer M2 of the junction portion 220. For example, when the first metal layer M1 is made of aluminum and the electrode lead 120 is made of aluminum, the electrode lead 120 may be welded to the first metal layer M1. Also, when the second metal layer M2 is made of copper and the electrode lead 120 is made of copper, the electrode lead 120 may be welded to the second metal layer M2.

According to this configuration of the present disclosure, the electrode lead 120 may be selectively welded to the junction portion 220 having the same metal material as that of the electrode lead 120. As a result, the weldability of the bus bar 200 and the electrode lead 120 may be improved.

In addition, according to this configuration of the present disclosure, even if the electrode lead 120 is welded to either the left side or the right side of the junction portion 220, bending of the electrode lead 120 may be minimized.

Referring to FIG. 11, a portion of the junction portion 220 may be bent toward the rear side or in the -Z-axis direction, and the remainder of the junction portion 220 may be bent toward the front side or in the +Z-axis direction. The electrode lead 120 may be selectively welded to the junction portion 220 bent toward the front side or in the +Z-axis direction or to the junction portion 220 bent toward the rear side or in the -Z-axis direction. That is, the junction portion 220 may be bent in either the +Z-axis direction or the -Z-axis direction depending on the material of the electrode lead 120 to be welded. In particular, when the positive electrode lead and the negative electrode lead are welded together for one bus bar 200, junction portions 220 bent in opposite directions with respect to the body portion 210 may be provided in one bus bar 200.

The electrode lead 120 may be welded to the right side of the junction portion 220 bent toward the front side or in the +Z-axis direction or to the second metal layer M2. In this case, the metal material of the electrode lead 120 and the metal material of the second metal layer M2 may be the same material.

Also, the electrode lead 120 may be welded to the right side of the junction portion 220 bent toward the rear side or in the -Z-axis direction or to the first metal layer M1. In this case, the metal material of the electrode lead 120 and the metal material of the first metal layer M1 may be the same material.

In this case, the length of the electrode lead 120 of the battery cell 100 welded to the junction portion 220 bent toward the front side or in the +Z-axis direction may be configured to be longer than the length of the electrode lead 120 of the battery cell 100 welded to the junction portion 220 bent toward the rear side or in the -Z-axis direction.

According to this configuration of the present disclosure, the electrode lead 120 may be selectively welded to the junction portion 220 having the same metal material as that of the electrode lead 120. As a result, the weldability of the bus bar 200 and the electrode lead 120 may be improved.

In addition, according to this configuration of the present disclosure, the degree of freedom in the stacking order of the battery cells 100 may be increased. The bending direction of the junction portion 220 may be selectively configured to correspond to the stacking order of the battery cells 100.

In addition, according to this configuration of the present disclosure, even if the electrode lead 120 is welded to either the junction portion 220 bent toward the front side or in the +Z-axis direction or the junction portion 220 bent toward the rear side or in the -Z-axis direction, bending of the electrode lead 120 may be minimized.

The battery pack according to the present disclosure may include the battery module according to the present disclosure described above. Also, the battery pack according to the present disclosure may further include various other components in addition to the battery module according to the present disclosure described above, for example, components of a battery pack known at the time of filing of the present disclosure, such as a BMS, a bus bar, a pack case, a relay, a current sensor, or the like.

The vehicle according to the present disclosure may include the battery module according to the present disclosure described above. The battery module according to the present disclosure may be applied to vehicles such as electric vehicles or hybrid vehicles. In addition, the vehicle according to the present disclosure may further include various other components included in the vehicle in addition to the battery module, such as a vehicle body, a motor, a control device like an electronic control unit (ECU), or the like.

The energy storage system (ESS) according to the present disclosure may include the battery module according to the present disclosure described above. In addition, the energy storage system according to the present disclosure may further include other components included in the energy storage system in addition to the battery module, such as a sensor for detecting the state of the battery module, a firefighting module for controlling thermal events, a DC part, an AC part, a BSC part, or the like.

Meanwhile, the terms indicating directions as used herein such as upper, lower, left, right, front, and rear are used for convenience of description only, and it is obvious to those skilled in the art that the term may change depending on the position of the stated element or an observer.

While the present disclosure has been hereinabove described with regard to a limited number of embodiments and drawings, the present disclosure is not limited thereto and it is obvious to those skilled in the art that a variety of modifications and changes may be made thereto within the technical aspects of the present disclosure and the equivalent scope of the appended claims.

## Claims

1. A battery module comprising:
a plurality of battery cells each having electrode leads protruding forward and stacked in the left-right direction; and
a bus bar comprising a body portion and a junction portion in which at least a portion of the body portion is configured in a bent form and electrically connected to the electrode lead.

2. The battery module according to claim 1,
wherein the electrode lead and the junction portion are configured to be coupled by welding.

3. The battery module according to claim 1,
wherein the junction portion is formed in plurality to correspond one-to-one to the electrode lead.

4. The battery module according to claim 1,
wherein the electrode lead is configured to have a flat shape.

5. The battery module according to claim 4,
wherein the electrode lead and the junction portion are configured to be in surface contact.

6. The battery module according to claim 1,
wherein the junction portion is configured to be integrally formed with the body portion.

7. The battery module according to claim 1,
wherein the junction portion extends in the front-rear direction.

8. The battery module according to claim 1,
wherein the junction portion is formed by cutting at least a portion of the body portion and bending the cut portion.

9. The battery module according to claim 1,
wherein the bus bar comprises a hole adjacent to the junction portion and penetrating the body portion,
wherein the diameter of the junction portion is configured to be smaller than the diameter of the hole.

10. The battery module according to claim 1,
wherein the bus bar comprises a hole adjacent to the junction portion and penetrating the body portion,
wherein the electrode lead passes through the hole.

11. The battery module according to claim 1,
wherein at least a portion of the bus bar is composed of different metal layers.

12. The battery module according to claim 11,
wherein at least a portion of the junction portion is composed of different metal layers.

13. A battery pack comprising a battery module according to any one of claims 1 to 12.

14. A vehicle comprising a battery module according to any one of claims 1 to 10.

15. An energy storage system comprising a battery module according to any one of claims 1 to 10.
